# EUROPÄISCHE PATENTSCHRIFT

(11) **EP 0 817 730 B1**
(45) Veröffentlichungstag und Bekanntmachung des Hinweises auf die Patenterteilung: **23.06.1999**
(21) Anmeldenummer: 96902236.7
(22) Anmeldetag: 16.02.1996
(51) Int. Cl.: B60K 41/26, B60T 13/58, G05G 5/03

(54) **INCHBREMSEINRICHTUNG**
INCHING BRAKE SYSTEM
SYSTEME DE FREINAGE D'APPROCHE LENTE

(30) Priorität: 11.04.1995 DE 19513805
(43) Veröffentlichungstag der Anmeldung: 14.01.1998
(73) Patentinhaber: Mannesmann Rexroth AG, 97816 Lohr am Main (DE)
(72) Erfinder: MIES, Hubertus, D-97816 Lohr (DE)
(74) Vertreter: Winter, Brandl, Fürniss, Hübner, Röss, Kaiser, Polte, Kindermann Partnerschaft
(86) Internationale Anmeldenummer: DE9600243
(87) Internationale Veröffentlichungsnummer: WO9632300

(56) Entgegenhaltungen:
- EP-A- 0 223 686
- EP-A- 0 633 155
- DE-A- 2 139 584
- DE-A- 2 152 573
- FR-A- 2 485 998
- FR-A- 2 567 663
- US-A- 3 166 950
- US-A- 3 741 356
- US-A- 4 265 144

## Beschreibung

Die Erfindung betrifft eine Inchbremseinrichtung für ein Arbeitsgerät, insbesondere für ein Nutzfahrzeug gemäß dem Oberbegriff des Patentanspruchs 1.

Bei schweren Nutzfahrzeugen, wie beispielsweise Radladern oder Hubstaplern etc. ist es bekannt, zum Abbremsen des Fahrzeugs neben der eigentlichen Bremsanlage auch das Antriebssystem zu nutzen, um eine Bremskraft aufzubringen. Das Bremsen mit dem Antriebssystem wird allgemein als "Inchen" bezeichnet. Die Aufteilung der Bremskraft auf die Bremsanlage und das Antriebssystem hat den Vorteil, daß der Bremsenverschleiß des Nutzfahrzeugs ganz erheblich verringert werden kann, da bei geringen Geschwindigkeitsänderung vorwiegend das Antriebssystem zum Abbremsen genutzt wird.

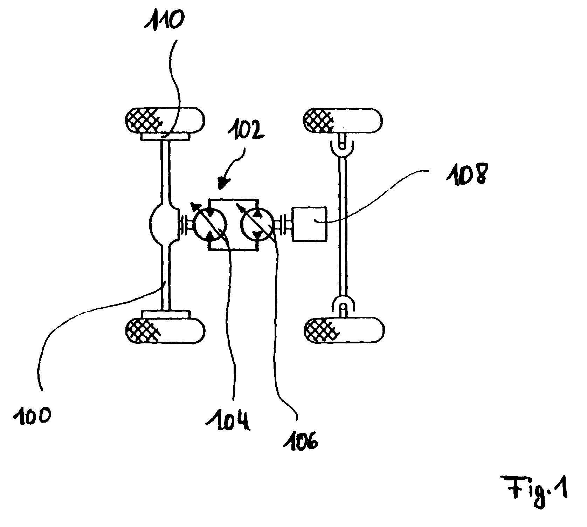

Zur Verdeutlichung des Funktionsprinzips herkömmlicher Incheinrichtungen ist in den Fig. 1 bis 4, auf die bereits jetzt Bezug genommen wird, eine Incheinrichtung eines Nutzfahrzeuges dargestellt.

Fig. 1 zeigt schematisch das Antriebssystem eines Nutzfahrzeugs, beispielsweise eines Hubstaplers, dessen angetriebene Achse 100 mittels eines hydrostatischen Antriebs 102 angetrieben wird.

Dieser hat beispielsweise einen Verstellmotor 104, d.h. einen Hydromotor mit verstellbarem Verdrängungsvolumen, der von einer Verstellpumpe 106 mit Hydraulikfluid versorgt wird, die ihrerseits von einem Verbrennungsmotor 108 angetrieben wird. Zur Erzeugung einer Bremswirkung durch das Antriebssystem kann entweder direkt an der angetriebenen Achse 100 oder genauer gesagt, im Bereich der Einheit Verstellpumpe/Verstellmotor 104/106 oder im Bereich des Verbrennungsmotors 108 eingegriffen werden, wobei bei letzterem beispielsweise die Nockenwellensteuerung oder eine Motorbremse angesteuert werden kann.

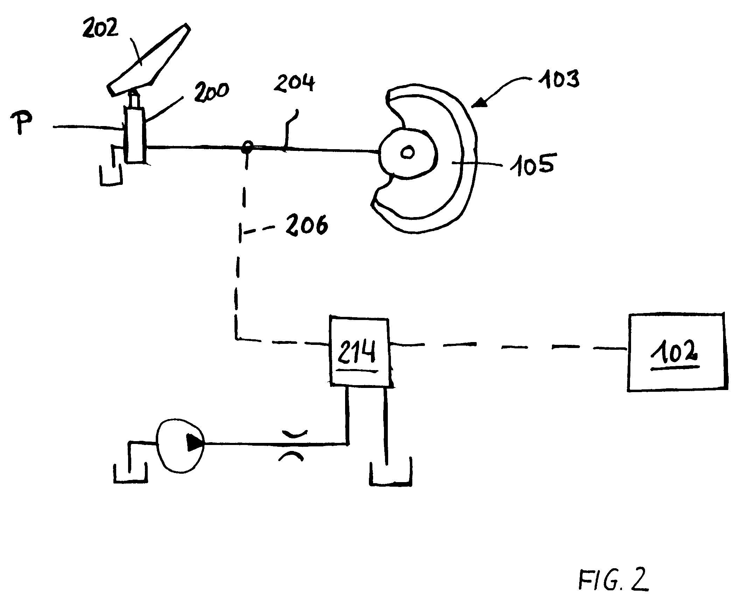

In Fig. 2 ist - stark vereinfacht - die Ansteuerung des Antriebssystems 102 und der Bremseinheit 103 dargestellt. Diese hat beispielsweise eine Lamellenbremse 105, die über Rückstellfedern (nicht gezeigt) derart vorgespannt ist, daß sie erst oberhalb eines Bremsdrucks von beispielsweise 10 bar Wirkung entfaltet. Die Ansteuerung der Bremseinheit 103 erfolgt über ein Inchbremsventil 200, über das Pumpen- oder Speicherdruck P abhängig vom Stellweg eines Bremspedals 202 auf einen gewünschten Bremsdruck reduzierbar ist. Von der Bremsleitung 204 zweigt eine Steuerleitung 206 ab, die zu einem Umformer oder Inchventil 214 geführt ist, über das die Verstellpumpe des Antriebssystems 102 ansteuerbar ist. Das heißt, das Antriebssystem 102 wird in Abhängikeit vom Stellweg des Bremspedals 202 angesteuert, wobei in einem ersten Teilschwenkbereich des Bremspedals, in dem der Bermsdruck beispielsweise < 10 bar ist, die Abbremsung alleine durch das Antriebssystem 102 erfolgt - das System befindet sich im Inchbereich. Bei Ansteigen des Bremsdruckes (über 10 bar) erfolgt die Abbremsung des Nutzfahrzeugs im wesentlichen durch die Wirkung der Bremseinheit 103. Die Vorspannung der Lamellenbremse kann auch durch ein Vorspannventil (nicht gezeigt) erfolgen, das eine ähnlich Funktion wie ein Druckbegrenzungsventil hat und beispielsweise bei 10 bar auslöst.

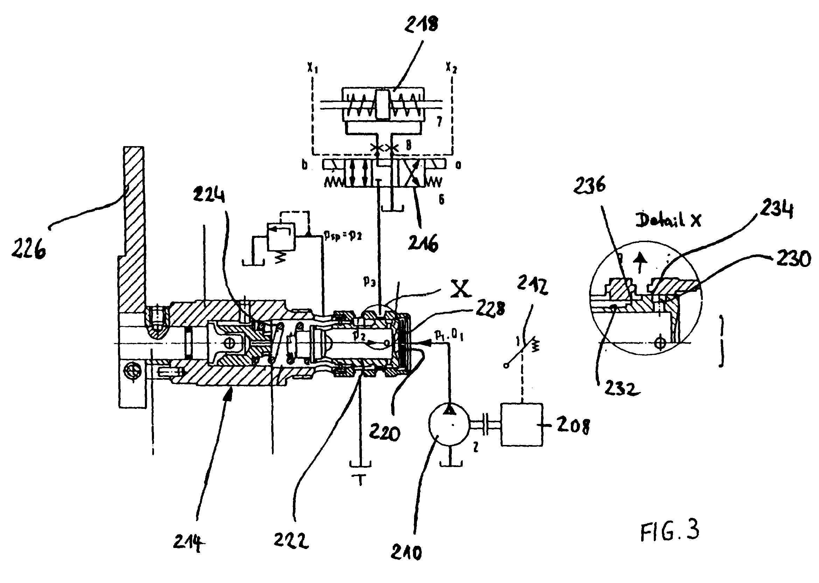

Fig. 3 zeigt ein Inchventil, oder genauer gesagt ein Drehinchventil, wie es im "Handbuch für Mobilgetriebe - Hydromatik-Mobilgetriebe für Hubstapler", MOBIL, M 2.2 (1/78) der Firma Hydromatik dargestellt ist und wie es - mit geringen Abwandlungen - im Schaltschema gemäß Fig. 2 verwendet werden könnte.

Bei dem in Fig. 3 dargestellten System wird eine Speisepumpe 210 über den Verbrennungsmotor 208 angetrieben, wobei dessen Ansteuerung beispielsweise über ein Stellglied 212 erfolgen kann. Der von der Speisepumpe 210 erzeugte Volumenstrom wird über das Inchventil 214 und ein Mehrwegeventil 216 zum Verstellzylinder 218 einer Verstellpumpe (nicht gezeigt) gefördert. Im Ventilgehäuse des Inchventils 214 ist ein Ventilschieber 222 geführt, der durch die Vorspannung einer Feder 224 in seine in Fig. 3 dargestellte Position vorgespannt ist. Die Vorspannung der Feder 224 läßt sich über einen Stellhebel 226 verändern. An der Stirnseite des Ventilschiebers 222 ist eine Blende 228 ausgebildet, durch die der Volumenstrom ins Innere des Ventilschiebers 222 eintreten kann. Dieser hat des weiteren eine Radialbohrung 230 (siehe Detail X), durch die - bei entsprechender Stellung des Ventilschiebers 222 - das Hydraulikfluid aus dem Inneren des Ventilschiebers 222 hin zum Mehrwegeventil 216 strömen kann. Der Ausgang des Inchventils läßt sich über eine Ringnut 232 des Ventilschiebers 222 mit einem Tankanschluß T verbinden, so daß das Hydraulikfluid vom Verstellzylinder in den Tank T entspannbar ist.

Die mit der Drehzahl des Verbrennungsmotors 108 (Fig. 1) drehende Speisepumpe 210 erzeugt einen drehzahlproportionalen Volumenstrom. Dadurch entsteht an der Blende 228 eine Druckdifferenz Δₚ, welche die Gleichgewichtslage des Ventilschiebers 222 so beeinflußt, daß eine Steuerkante 234 (Detail X) öffnet und Hydraulikfluid oder besser gesagt, Steueröl zum Verstellzylinder 218 strömt. In der Steuerleitung baut sich ein Steuerdruck p₃ auf, der den Ventilschieber 222 so lange verschiebt, bis die Steuerkante 234 wieder geschlossen ist. Umgekehrt wird bei Verkleinerung der Druckdifferenz Δₚ an der Blende 228 eine Steuerkante 236 (Detail X) geöffnet, so daß Steueröl über die Ringnut 232 hin zum Tank T strömen kann, bis wieder Gleichgewicht am Ventilschieber 222 herrscht. Durch Verdrehen der Druckpunkteinrichtung 226 wird die Druckfeder 224 vorgespannt, so daß die Kennlinie des Ventils, d.h. die Abhängigkeit des Steuerdrucks p₃ von der Antriebsdrehzahl in Richtung zur höheren Drehzahl verschoben wird, so daß bei gleicher Drehzahl ein geringerer Steuerdruck p₃ entsteht. Durch entsprechende weitere Vorspannung der Druckfeder 224 läßt sich der Steuerdruck p₃ selbst bei maximaler Antriebsdrehzahl bis auf den Wert 0 absenken. Das heißt also, durch Betätigung der Druckpunkteinrichtung 226 kann der Steuerdruck für die Verstellpumpe bei konstanter Antriebsdrehzahl über weite Bereiche variiert werden, so daß die angetriebene Achse allein durch entsprechende Ansteuerung der Verstellpumpe abbremsbar ist.

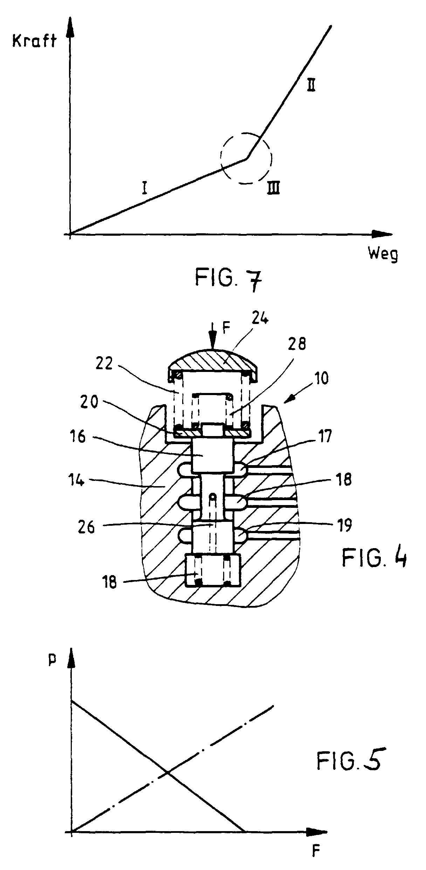

Die Funktion des Inchbremsventils 200 wird im folgenden anhand der schematischen Darstellung in Fig. 4 erläutert. Demgemäß hat das Inchbremsventil 200 ein Ventilgehäuse 14, in dem ein Ventilschieber 16 längsverschiebbar geführt ist. In der Ventilbohrung sind drei Ringräume 17, 18, 19 ausgebildet, wobei der erste Ringraum 17 mit dem Tankanschluß verbunden ist, der zweite Ringraum 18 mit dem von dem Inchbremsventil 200 angesteuerten Umformer 214 des Antriebssystems und der dritte Ringraum 19 mit einem Druckspeicher oder einer Pumpe verbunden ist.

Der Ventilschieber 16 ist an seinem in Fig. 4 unteren Endabschnitt über eine Rückstellfeder 18 vorgespannt. Das von der Rückstellfeder 18 entfernte Ende des Ventilschiebers 16 steht aus dem Ventilgehäuse 14 hervor und trägt an diesem Abschnitt einen Federteller 20, an dem eine Druckfeder 22 abgestützt ist. An dem vom Federteller 20 entfernten Ende der Druckfeder 22 greift ein Betätigungskolben 24 an, der in einer Erweiterung der Ventilbohrung und koaxial zum Ventilschieber 22 im Ventilgehäuse geführt ist. Im Ventilschieber 16 ist eine Radial-/Axial-Bohrung 26 ausgebildet, durch die der Druck im Ringraum 18 als Steuerdruck an diejenige Stirnseite des Ventilschiebers 16 führbar ist, an der die Rückstellfeder 18 angreift. Die Stellung des Ventilschiebers 16 ist somit durch die über den Betätigungskolben 24 und die Druckfeder 22 aufgebrachte Kraft F einerseits und die durch den Steuerdruck und die Rückstellfeder aufgebrachte Kraft andererseits bestimmt. In der gezeigten Stellung ist der zweite Ringraum 18 mit dem ersten Ringraum 17 verbunden, so daß das Hydraulikfluid vom Antriebssystem in den Tank T entspannbar ist. Wird nun die Kraft F auf den Betätigungskolben 24 erhöht, so wird der Ventilschieber 16 gegen die Kraft der Rückstellfeder 18 nach unten verschoben, bis die Verbindung zwischen dem zweiten Ringraum 18 und dem dritten Ringraum 19 aufgesteuert wird, so daß das Antriebssystem über den Speicher oder die Pumpe mit Hydraulikfluid versorgt wird. Gleichzeitig wird die Tankverbindung unterbrochen, so daß sich ein bestimmter Steuerdruck am Ausgang (Ringraum 18) des Inchbremsventils 200 aufbaut.

Dieser Druck wird über die Radial-/Axial-Bohrung 26 an die in Fig. 4 untere Stirnseite des Ventilschiebers 16 geführt, so daß dieser mit aufbauendem Druck wieder nach oben verschoben und die Verbindung zwischen den Ringräumen 18 und 19 zugesteuert wird, während die Verbindung zwischen den Ringräumen 18 und 17 aufgesteuert wird, so daß der Ausgangsdruck absinkt, bis sich am Ventilschieber 16 ein Druckgleichgewicht eingestellt hat. Im Druckgleichgewicht ist die Verbindung zwischen den Ringräumen 19, 18 und 18, 17 geschlossen.

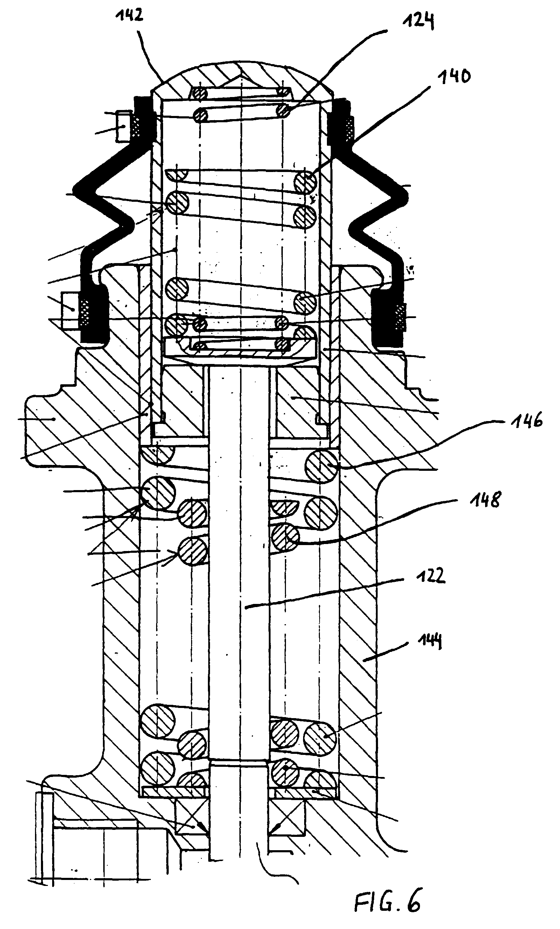

Bei einem derartigen Inchbremsventil 200 steigt der Ausgangsdruck, d.h. der Steuerdruck P, der dem Antriebssystem zugeführt wird, mit der Betätigungskraft F an, so daß sich eine in Fig. 5 strichpunktiert darstellte Kennlinie ergibt.

Bei dem eingangs im Zusammenhang mit Fig. 3 beschriebenen Inchventil 214 hängt der Steuerdruck P umgekehrt proportional von der Betätigungskraft F oder vom Steuerdruck ab, so daß sich die durchgezogene abfallende Kennlinie in Fig. 5 ergibt.

Beim Inchbremsventil 200 gemäß Fig. 4 kann eine zweite Lastfeder 28 vorgesehen werden, die erst nach einem vorbestimmten Hub des Betätigungskolbens 24 in Anlage an diesen kommt und somit die Federsteifigkeit des Federsystems erhöht. In diesem Fall wird sich eine geknickte Federkennlinie einstellen, wie sie im folgenden noch näher beschrieben wird.

In Fig. 6 ist derjenige Teil eines Inchbremsventils 200 dargestellt, in dem den beiden Druckfedern 22 und 28 (aus Fig. 4) entsprechende Federsysteme aufgenommen sind.

Gemäß Fig. 6 hat das bekannte Inchbremsventil 200 eine Betätigungseinrichtung, die als Betätigungskolben 142 ausgeführt sein kann, der koaxial zum Ventilschieber 121 im Ventilgehäuse 144 geführt ist. An dem in Fig. 6 oberen Endabschnitt des Ventilschiebers 121 ist in dessen Verlängerung ein radial erweiterter, mit einem Nabenabschnitt versehener Federteller 122 ausgebildet, an dem sich zwei Druckfedern 124 und 140 abstützen, wobei die erste Druckfeder 124 an der Grundfläche des becherförmigen Betätigungskolbens 142 anliegt. Das obere Ende der weiteren Druckfeder 140 ist im Abstand zur Bodenfläche des Betätigungskolbens 142 angeordnet, so daß diese bei einem vorbestimmten Hub des Betätigungskolbens 142 Wirkung entfaltet.

Um die erforderliche Betätigungskraft zu erhöhen, sind im Ventilgehäuse 144 zwei parallel geschaltete Lastfedern 146, 148 abgestützt, die nacheinander in Anlage an den Betätigungskolben 142 bringbar sind. Die zur Betätigung des Betätigungskolbens 142 erforderliche Kraft wird somit durch das Federsystem bestehend aus den Druckfedern 124, 140 und den Lastfedern 146 und 148 bestimmt, wobei die auf den Federteller 122 wirkende Vorspannung allein durch die Druckfedern 124, 140 bestimmt ist.

Bei Betätigung des Betätigungskolbens 142 werden zunächst die Druckfeder 124 und die Lastfeder 146 gespannt, die Druckfeder 140 und die Lastfeder 148 stehen noch nicht in Wirkeingriff mit dem Betätigungskolben 142 bzw. mit dem Ventilschieber 122.

In dem Bereich, in dem die beiden Federn 140, 148 noch keine Wirkung entfalten, findet das vorbeschriebene Inchen statt, bei dem das Abbremsen des Fahrzeugs allein durch eine entsprechende Ansteuerung des Antriebssystems erfolgt. Beim weiteren Durchdrücken des Betätigungskolbens 142 werden auch die Federn 140 und 148 zusammengedrückt, wobei die Systemabstimmung des Fahrzeugs derart ist, daß in diesem Bereich zusätzlich zur Wirkung des Antriebssystems die eigentliche Bremsanlage zur Erzeugung einer Bremskraft verwendet wird. In diesem Bereich, in dem die Bremsanlage hinzugeschaltet wird, wird ein größerer Kraftaufwand zur Betätigung des Betätigungskolbens 142 benötigt, da nunmehr die Federn 124, 140 und 146, 148 auf den Betätigungskolben 142 bzw. auf den Ventilschieber 122 wirken. Die zur Kompression der Druckfedern 124 und 140 aufzubringende Kraft beträgt etwa 15 % der Betätigungskraft, während die zur Kompression der Lastfedern 146, 148 erforderliche Kraft etwa 85 % der Betätigungskraft ausmacht.

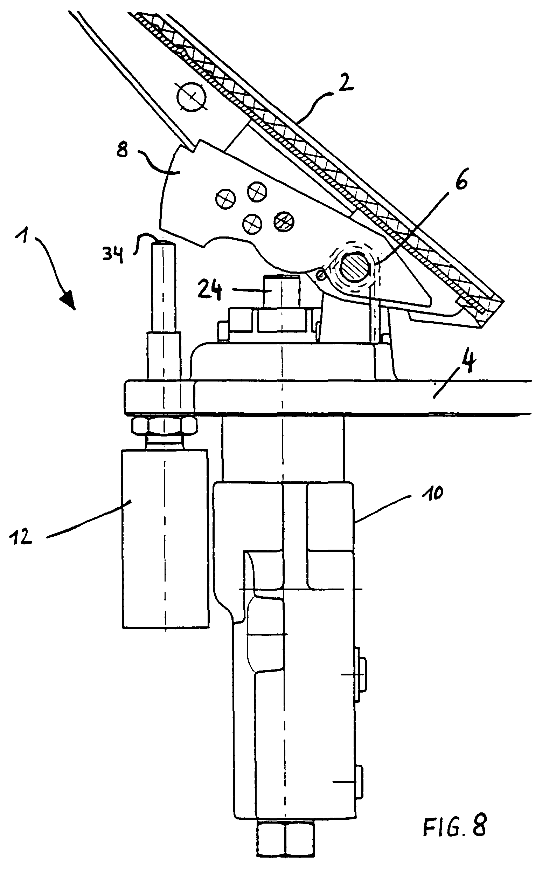

In Fig. 7 ist schematisch eine Kennlinie dargestellt, bei der die Kraft zur Betätigung des Betätigungskolbens 142 über dessen Stellweg dargestellt ist. Im ersten Bereich I, in dem die Bewegung des Betätigungskolbens 142 gegen die Kraft der Feder 146 und die von der Druckfeder 124 aufgebrachten Kraft erfolgt, stellt sich eine vergleichsweise flache Kennlinie ein, bei der verhältnismäßig geringe Kräfte ausreichen, um den Betätigungskolben 142 zu verschieben.

Sobald die beiden zusätzlichen Federn 140, 148 Wirkung entfalten, wird mehr Kraft benötigt, um den Betätigungskolben 142 zu verschieben, so daß sich eine steilere Kennlinie einstellt. In dem mit II gekennzeichneten Bereich erfolgt - wie bereits erwähnt - das Abbremsen des Fahrzeugs durch die eigentliche Bremsanlage und das Antriebssystem, während im mit I gekennzeichneten Bereich das Bremsen lediglich über das Antriebssystem erfolgt. Bei der Betätigung des Betätigungskolbens 142 wird somit im Übergangsbereich III die eigentliche Bremsanlage hinzugeschaltet, so daß die Bremswirkung (Summe aus Bremsmoment durch Antriebssystem und Bremsanlage) ansteigt. In ungünstigen Fällen kann es dann dazu kommen, daß die Bedienperson bei Betätigung des Betätigungskolbens 142 im Bereich III versehentlich den Inchbereich verläßt und somit das Fahrzeug ungewollt stark abgebremst oder überbremst wird, was - verursacht durch die auftretende starke Verzögerung - zu einem Verrutschen oder Herabfallen der vom Fahrzeug getragenen Lasten oder zu einem Aufprallen des Fahrers auf das Armaturenbrett oder die Windschutzscheibe führen kann.

Demgegenüber liegt der Erfindung die Aufgabe zugrunde, eine Inchbremseinrichtung zu schaffen, bei der mit minimalem vorrichtungstechnischen Aufwand die Betriebssicherheit des angesteuerten Arbeitsgeräts erhöht ist.

Diese Aufgabe wird durch die Merkmale des Patentanspruchs 1 gelöst.

Durch das Vorsehen der Druckpunkteinrichtung ist die Betätigung der Betätigungseinrichtung beim Übergang vom Inchen zum eigentlichen Bremse nur möglich, wenn ein stufenförmiger Schwellwiderstand überwunden wird, so daß in diesem Übergangsbereich ein Druckpunkt aufgebaut wird, der von der Bedienperson wahrgenommen wird und diese darüber informiert ist, daß sie bei weiterer Betätigung der Betätigungseinrichtung den Inchbereich verläßt. Die Druckpunkteinrichrung simuliert somit einen Druckpunkt im Übergangsbereich zwischen dem Inchen und dem eigentlichen Bremsen.

Bei der Druckpunkteinrichtung kann es sich um eine mechanische oder elektrische Einrichtung handeln, so daß diese sowohl bei elektrisch betriebenen Arbeitsgeräten als auch bei hydraulisch oder elektro-hydraulisch betriebenen Arbeitsgeräten einsetzbar ist.

Eine besonders robuste Druckpunkteinrichtung erhält man, wenn diese mit einem Federsystem versehen wird, das gegen die Betätigungseinrichtung wirkt. Das Federsystem hat dabei eine vorgespannte Lastfeder, die nur in demjenigen Bereich, in dem die eigentliche Bremsanlage Wirkung entfaltet, in Wirkverbindung mit der Betätigungseinrichtung gebracht wird. Im Inchbereich erfolgt die Bewegung der Betätigungseinrichtung gegen die Spannung einer zweiten Lastfeder, die parallel zur ersten Lastfeder geschaltet ist. Letztere gelangt erst im Übergangsbereich zwischen Inchen und Bremsen in Anlage an die Betätigungseinrichtung, so daß diese erst weiter bewegt werden kann, wenn die Federvorspannung überwunden wird. Durch entsprechende Auslegung der Federvorspannung, der Federkonstanten und der Betätigungsglieder für die Federn kann somit ein stufenförmiger Widerstand im Übergangsbereich aufgebaut werden, so daß die Bedienperson genau darüber informiert ist, wann der Inchbereich verlassen wird.

Da die Arbeitsgeräte, wie beispielsweise Radlader, üblicherweise mit einem Hydrauliksystem versehen sind, bietet es sich an, der Inchbremseinrichtung ein in den Hydraulikkreislauf geschaltetes Bremsventil mit einem Ventilschieber zuzuordnen, der mit der Betätigungseinrichtung in Wirkverbindung steht, wobei das Betätigungselement über eine Druckfeder am Ventilschieber abgestützt ist.

Dieser Druckfeder kann vorteilhafterweise eine zweite Druckfeder parallelgeschaltet werden, die dem eigentlichen Bremsvorgang zugeordnet ist, so daß in diesem Bereich eine erhöhte Kraft zur Betätigung der Betätigungseinrichtung erforderlich ist.

Eine besonders kompakte Inchbremseinrichtung erhält man, wenn die Betätigungseinrichtung als Betätigungskolben ausgebildet ist, der koaxial zum Ventilschieber im Ventilgehäuse geführt ist.

Bei einem derartigen Ausführungsbeispiel können die beiden Lastfedern und eine oder beide Druckfedern koaxial zueinander im Ventilgehäuse aufgenommen werden, wobei der Betätigungskolben einen Anlageabschnitt hat, mit dem er in Anlage an die vorgespannte erste Lastfeder bringbar ist.

Bei einem weiteren vorteilhaften Ausführungsbeispiel ist in Verlängerung des Ventilschiebers ein Federteller vorgesehen, an dem die beiden Druckfedern abgestützt sind, wobei der Betätigungskolben einen Anlageabschnitt hat, mit dem er in Anlage an die vorgespannte erste Lastfeder bringbar ist.

Während bei den beiden vorbeschriebenen Ausführungsbeispielen die Druckpunkteinrichtung mit den beiden Lastfedern und eine oder beide auf den Ventilschieber wirkenden Druckfedern in einem gemeinsamen Gehäuse aufgenommen sind, können die beiden Lastfedern gemäß einer vorteilhaften Weiterbildung der Erfindung in einem eigenen Gehäuse aufgenommen sein. Die Druckpunkteinrichtung hat dabei einen Stellkolben, an dem die beiden Lastfedern angreifen und der in Anlage an die Betätigungseinrichtung bringbar ist. Bei einer derartigen Variante sind also die Druckpunkteinrichtung und das Bremsventil in getrennten Gehäusen untergebracht, so daß beispielsweise auch bestehende Systeme mit den erfindungsgemäßen Druckpunkteinrichtungen nachrüstbar sind.

Eine besonders einfach aufgebaute Inchbremseinrichtung erhält man, wenn die Betätigungseinrichtung mit einem Meßaufnehmer zur Erfassung der Stellbewegung versehen ist, wobei der Meßaufnehmer an eine Steuereinheit angeschlossen ist, die wiederum ein Signal an die Antriebseinrichtung oder genauer gesagt, an das Inchventil (Fig.2) abgibt, so daß die Antriebseinrichtung in Abhängigkeit von der Stellung der Betätigungseinrichtung ansteuerbar ist. Bei einem derartigen Ausführungsbeispiel wird es bevorzugt, daß die Steuereinheit nur im Inchbereich wirksam ist, während die Ansteuerung des Bremsventils beim Bremsen wiederum über eine Druckfeder erfolgt, die erst nach dem Inchen in Eingriff mit der Betätigungseinrichtung kommt. Das heißt, bei einem derartigen System muß neben den beiden Lastfedern der Druckpunkteinrichtung nur eine Druckfeder vorgesehen werden, da die Ansteuerung im Inchbereich allein über die Steuereinheit erfolgt.

Um die Bremswirkung besser dosieren zu können, erfolgt der Eingriff der eigentlichen Bremse erst dann, nachdem der Druckpunkt der Druckpunkteinrichtung überwunden wurde und die Betätigungseinrichtung noch um einen Zwischenhub weiterverschoben wird.

Die Bediensicherheit des Arbeitsgeräts läßt sich weiter erhöhen, wenn auch zu Beginn des Inchvorgangs ein Druckpunkt an der Betätigungseinrichtung aufgebaut wird. Dies kann beispielsweise erzielt werden, indem auch die zweite Lastfeder mit Vorspannung in der Druckpunkteinrichtung aufgenommen ist, so daß das Inchen erst dann erfolgen kann, wenn die Betätigungseinrichtung über den durch die zweite Lastfeder definierten Druckpunkt bewegt ist.

Wie bereits eingangs erwähnt, muß die Druckpunkteinrichtung nicht notwendigerweise als Federsystem ausgebildet werden, sondern diese kann auch einen elektrischen Antrieb haben, der beispielsweise in Abhängigkeit vom Meßsignal des Meßaufnehmers ansteuerbar ist. Die Ansteuerung des Inchventils kann dann ebenfalls in Abhängigkeit vom Meßsignal des Meßaufnehmers erfolgen.

Ganz besonders vorteilhaft läßt sich die Inchbremseinrichtung bei einem Nutzfahrzeug mit hydrostatischem Antrieb anwenden, wobei die Betätigungseinrichtung ein Bremspedal ist, das in seine Ruhestellung federvorgespannt ist, so daß die Bewegung des Bremspedals gegen die Federvorspannung erfolgt.

Weitere vorteilhafte Ausgestaltungen der Erfindung sind Gegenstand der sonstigen Unteransprüche.

Bevorzugte Ausführungsbeispiele der Erfindung werden im folgenden anhand schematischer Zeichnungen näher erläutert.

Es zeigen:
- Fig. 1: eine schematische Darstellung des Antriebs eines Nutzfahrzeugs;
- Fig. 2: ein Blockschaubild eines Inchbremssystems für ein Nutzfahrzeug;
- Fig. 3: eine schematische Darstellung eines mechanisch betätigten Inchventils, auch Drehwinkelventil genannt;
- Fig. 4: eine schematische Schnittdarstellung eines Bremsventils aus Fig. 2;
- Fig. 5: Kennlinien eines Bremsventils und eines Inchventils;
- Fig. 6: eine Teildarstellung eines bekannten Inchbremsventils;
- Fig. 7: ein Diagramm, in dem die Betätigungskraft über den Verstellweg eines bekannten Inchbremsventils dargestellt ist;
- Fig. 8: eine Seitenansicht einer erfindungsgemäßen Inchbremseinrichtung;
- Fig. 9: eine Druckpunkteinrichtung der Inchbremseinrichtung aus Fig. 8;
- Fig. 10a, b, c: Diagramme zur Erläuterung der Funktionsweise der erfindungsgemäßen Inchbremseinrichtungen;
- Fig. 11: ein weiteres Ausführungsbeispiel einer erfindungsgemäßen Inchbremseinrichtung;

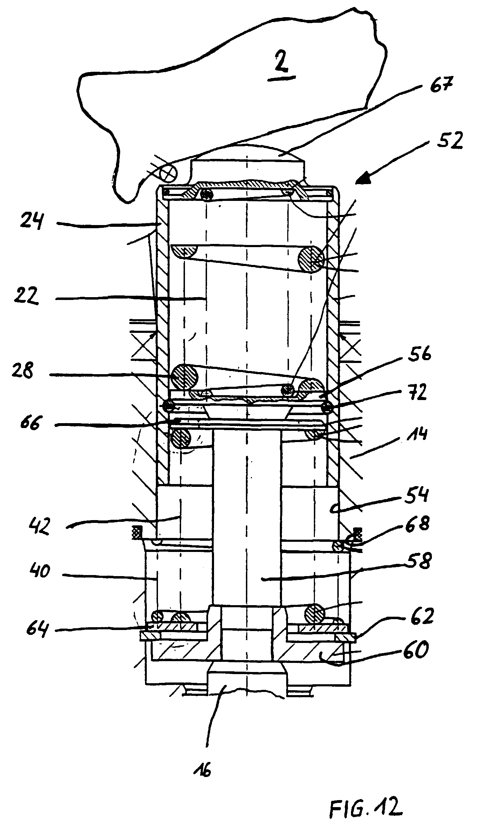

- Fig. 12: ein drittes Ausführungsbeispiel einer Inchbremseinrichtung, bei der die Druckpunkteinrichtung im Gehäuse des Bremsventils aufgenommen ist und

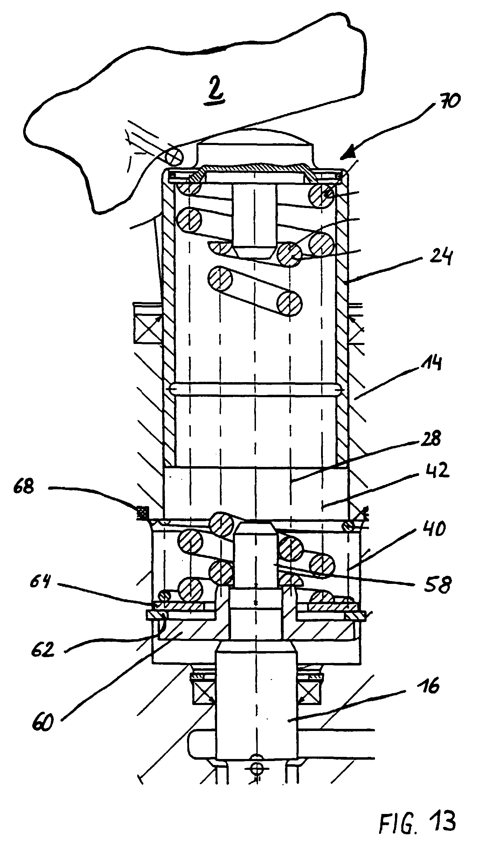

- Fig. 13: eine weitere Variante zu einer Ausführungsform gemäß Fig. 12.

In Fig. 8 ist eine Seitenansicht eines ersten Ausführungsbeispiels einer erfindungsgemäßen Inchbremseinrichtung gezeigt. Diese ist für die Ansteuerung der Antriebseinrichtung eines Nutzfahrzeugs, beispielsweise eines Radladers, vorgesehen, der mit einem hydrostatischen Antrieb versehen ist. Selbstverständlich können auch andere Arbeitsgeräte, wie beispielsweise Hubgeräte mit der erfindungsgemäßen Inchbremseinrichtung ausgerüstet werden, wobei diese beispielsweise dem Hubmechanismus zu deren Feinansteuerung zugeordnet sein kann.

Beim gezeigten Ausführungsbeispiel wird die Inchbremseinrichtung 1 über ein Bremspedal 2 betätigt, das auf einer Konsole 4 schwenkbar befestigt ist. Das Bremspedal 2 ist über eine Torsionsfeder 6 in seine Ruhestellung vorgespannt, in der eine Anschlagplatte 8 im Abstand zu dem Betätigungselement einer Inchbremsventilanordnung angeordnet, die ein Bremsventil 10 und eine Druckpunkteinrichtung 12 hat, die im folgenden noch eingehend beschrieben werden.

Zur Einleitung des Bremsvorgangs wird das Bremspedal 2 gegen die Vorspannung der Torsionsfeder 6 nach unten verschwenkt, bis die Anschlagplatte 8 in Anlage an die Betätigungselemente des Bremsventils 10 und der Druckpunkteinrichtung 12 gelangt. Beim weiteren Betätigen des Bremspedals 2 wird über das Bremsventil 10 und das Inchventil das Antriebssystem des Radladers derart angesteuert, daß eine Bremswirkung erzielbar ist, ohne daß das eigentliche Bremsanlage des Radladers betätigt wird. Die verzögerte Ansteuerung der Bremsanlage kann durch die eingangs erwähnte Federvorspannung der Bremslamellen (hydraulisches System) oder durch eine elektrische AnSteuerung erfolgen. Über das Bremsventil 10 und das Inchventil kann beispielsweise der Stellzylinder einer Verstellpumpe des hydrostatischen Antriebs, die Nockenwellensteuerung eines Verbrennungsmotors des hydrostatischen Antriebs, eine geeignete Motorbremse oder eine Verzögerungseinrichtung (Retarder) angesteuert werden.

Der Aufbau des Bremsventils 10 entspricht demjenigen des Bremsventils 200 aus Fig. 4, so daß auf die diesbezüglichen Ausführungen verwiesen werden kann.

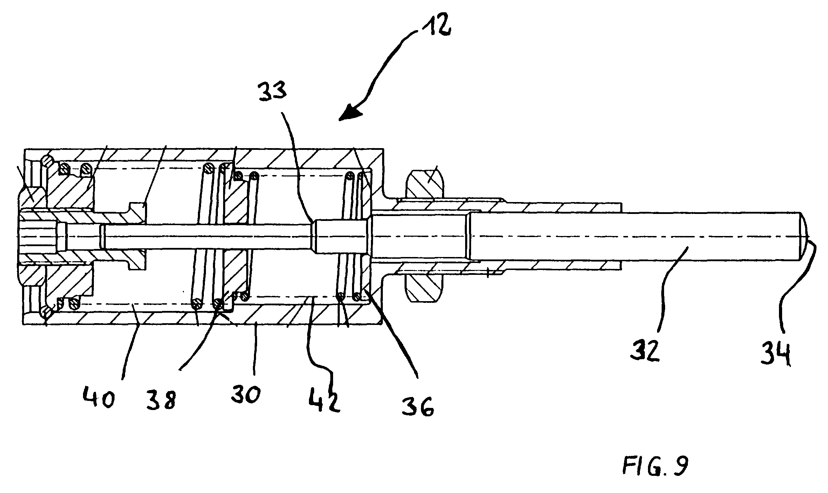

In Fig. 9 ist ein Längsschnitt durch die Druckpunkteinrichtung 12 aus Fig. 8 dargestellt.

Demgemäß hat diese ein Gehäuse 30, in dessen Achse ein Stellkolben 32 geführt ist, der mit einem Betätigungsabschnitt 34 aus dem Gehäuse 30 vorsteht. Der Stellkolben 32 hat einen ersten Federteller 36, der an einen stufenförmigen Vorsprung des Stellkolbens 32 abgestützt ist. Des weiteren ist im Gehäuse ein längsverschiebbarer Federteller 38 geführt, der vom Stellkolben 32 durchsetzt ist. Zwischen der vom ersten Federteller 36 entfernten Stirnseite des Gehäuses 30 und dem längsverschiebbaren Federteller 38 ist eine erste Lastfeder 40 eingespannt, durch die der Federteller mit einem Umfangsabschnitt gegen eine stufenförmige Einschnürung des Gehäuses 30 vorgespannt ist. Auf der anderen Großfläche des längsverschiebbaren Federtellers 38 ist eine zweite Lastfeder 42 vorgesehen, die sich am ersten Federteller 36 abstützt. Beim gezeigten Ausführungsbeispiel ist auch diese zweite Lastfeder 42 mit einer vorbestimmten Vorspannung eingebaut.

Die Vorspannung der ersten Lastfeder 40 und die Federkonstanten der beiden Lastfedern 40 und 42 sind derart aufeinander abgestimmt, daß die erste Lastfeder 40 in der gezeichneten Position verbleibt, bis der Stellkolben 32 bei seiner Stellbewegung mit einem Radialvorsprung 33 in Anlage gerät an den längsverschiebbaren Federteller 38, wobei die Lastfeder 42 komprimiert wird. Erst nach Überwinden der Vorspannung der ersten Lastfeder 40 wird der längsverschiebbare Federteller 38 von der stufenförmigen Einschnürung abgehoben und die erste Lastfeder 40 zusammengedrückt.

Bei der Betätigung des Bremspedals 2 gelangt zunächst die Anschlagplatte 8 in Anlage an den Betätigungsabschnitt 34. Dieser erste Verschwenkbereich des Bremspedals 2 erfolgt - wie bereits genannt - gegen die Spannung der Torsionsfeder 6. Um die Vorspannung der zweiten Lastfeder 42 zu überwinden, muß von der Bedienperson eine erhöhte Betätigungskraft F aufgebracht werden, so daß diese zu Beginn der Verformung der zweiten Lastfeder 42 einen Druckpunkt überwinden muß. Bei weiterer Steigerung der Betätigungskraft F wird die zweite Lastfeder 42 zusammengedrückt. Nach einem vorbestimmten Hub kommt der Radialvorsprung 33 in Anlage an den Federteller 38, wobei die erste Lastfeder 40 zunächst noch im Ausgangszustand verbleibt. Um auch diese Lastfeder 40 zu verformen muß eine erhöhte Betätigungskraft F aufgebracht werden, so daß die Bedienperson wiederum einen Druckpunkt verspürt. Erst nach Überwinden dieses Druckpunkts oder genauer gesagt, der Vorspannung der ersten Lastfeder 40 kann der Stellkolben 32 weiter bewegt werden. Das heißt, mit der erfindungsgemäßen Druckpunkteinrichtung 12 werden zwei Druckpunkte simuliert, die das Einleiten des Inchens und den Beginn des Bremsvorgangs der Achsen des Nutzfahrzeugs anzeigen.

Die Druckpunkteinrichtung 12 beeinflußt lediglich die Betätigungskraft F des Bremspedals 2 und hat keinerlei unmittelbare Einwirkung auf die Wirkung des Bremsventils 10.

Aus dem vorstehenden geht hervor, daß das Zusammendrücken der ersten Lastfeder 40 und das Auftreffen des Betätigungskolbens 24 auf die zweite Lastfeder 42 etwa gleichzeitig erfolgen, so daß die Erhöhung der "Gesamt-Federsteifigkeit" der Inchbremsanordnung dann erfolgt, wenn die Bedienperson den entsprechenden Druckpunkt verspürt.

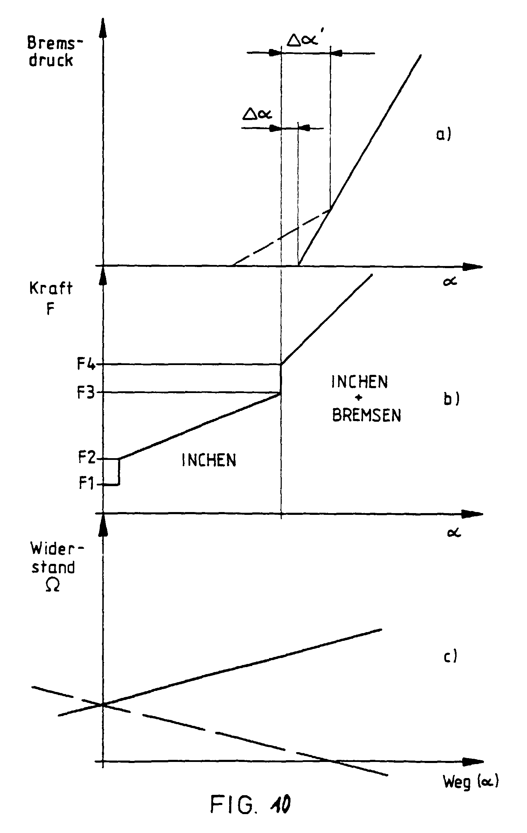

Die vorgenannten Zusammenhänge lassen sich anhand der Fig. 10a-c verdeutlichen.

Fig. 10b zeigt ein Diagramm, in dem die Betätigungskraft F in Abhängigkeit vom Hub oder Verdrehwinkel α des Bremspedals 2 dargestellt ist.

Wie bereits erwähnt ist das Bremspedal 2 über die Torsionsfeder 6 in seine Grundstellung vorgespannt, so daß zunächst eine vorbestimmte Kraft F₁ aufgebracht werden muß, um die Vorspannung der Feder zu überwinden. Wie in Fig. 8 dargestellt ist, ist die Anschlagplatte 8 zunächst im Abstand zum Betätigungsabschnitt 34 und zum Betätigungskolben 24 angeordnet, so daß zunächst ein Leerhub, lediglich gegen die Kraft der Torsionsfeder 6 erfolgt. Bei einem weiteren Verschwenken des Bremspedal 2 gerät die Anschlagplatte 8 in Anlage an den Betätigungsabschnitt 34, so daß der erste Druckpunkt verspürbar ist. Die zur Überwindung der Federvorspannung der zweiten Lastfeder 42 erforderliche Kraft ist proportional zur Differenz zwischen den Kräften F₂ - F₁ in Fig. 10b. Die weitere Verschwenkung des Bremspedals 2 erfolgt proportional zur aufgebrachten Kraft in Abhängigkeit von der vergleichsweise geringen Federsteifigkeit der zweiten Lastfeder 42. Beim weiteren Verschwenken des Bremspedals 2 wird die zweite Lastfeder 42 zusammengedrückt, bis der Radialvorsprung 33 am Federteller 38 anliegt, während die erste Lastfeder 40 in der in Fig. 9 dargestellten Position verbleibt. Dieser Punkt ist beim Aufbringen der Betätigungskraft F₃ erreicht. Um nun auch die erste Lastfeder 40 zusammenzudrücken, muß deren Vorspannung überwunden werden, die der Kraftdifferenz F₄ - F₃ entspricht, so daß die Bedienperson einen zweiten Druckpunkt verspürt, der den Beginn des Abbremsens der Antriebsräder kennzeichnet, während im Bereich zwischen dem ersten Druckpunkt und dem zweiten Druckpunkt lediglich ein Inchen erfolgt.

Nach Überwinden der Federvorspannung der ersten Lastfeder 40 erfolgt wieder ein proportionaler Anstieg der Betätigungskraft F mit dem Betätigungsweg α des Bremspedals 2, wobei dieser Anstieg gemäß Fig. 10b aufgrund der größeren Federsteifigkeit und aufgrund der bei höherem Regeldruck in der Bremse höheren Kolbenrückstellkraft (Bremsventil 10) steiler erfolgt.

Wie aus den Fig. 10a und 10b hervorgeht, erfolgt die AnSteuerung der Bremsanlage, über die die Antriebsräder des Nutzfahrzeugs abgebremst werden, erst nach einer Strecke Δα, um die das Bremspedal 2 über den zweiten Druckpunkt hinaus weiterbewegt werden muß, so daß der Bremsdruck besser dosierbar ist.

Wie in Fig. 10a gestrichelt angedeutet ist, kann es bei bestimmten Anwendungsfällen vorteilhaft sein, wenn auch der Bremsdruck an den Achsen zunächst flacher ansteigend aufgebaut wird, so daß sich ein Übergangsbereich im System ausbildet, in dem ein geringer Bremsdruck über die Bremsanlage auf die Achsen des Nutzfahrzeugs übertragen wird und in dem zusätzlich ein Inchen erfolgt. Das heißt, in diesem Übergangsbereich wird die Bremsanlage des Nutzfahrzeugs in geringem Maße mit in den Bremsvorgang einbezogen. Die hohe Verzögerung mit steiler Kennlinie erfolgt allerdings erst wieder nach Überschreiten des zweiten Druckpunkts und nach einem vorbestimmten Zwischenhub Δα' wenn die in Fig. 10a durchgezogen dargestellte Kennlinie erreicht ist. Das heißt, auch bei diesem Ausführungsbeispiel ist der Punkt, an dem die Bremswirkung überwiegend durch die Wirkung der Bremsanlage erfolgt erst nach dem zweiten Druckpunkt vorgesehen.

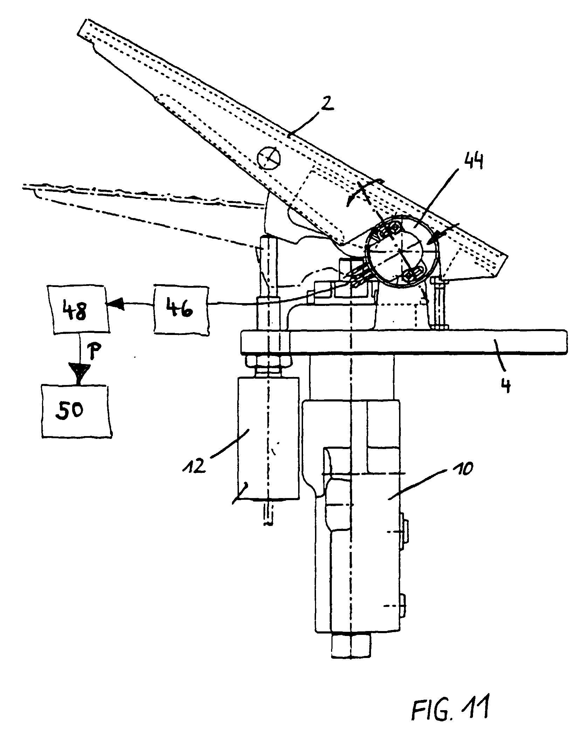

In Fig. 11 ist eine Variation des Ausführungsbeispiels aus Fig. 8 dargestellt. Auch diese Variante hat ein Bremspedal 2, das auf der Konsole 4 montiert ist und mittels einer Torsionsfeder - nicht gezeigt - in seine Ruhestellung (durchgezogene Linie) vorgespannt ist. Des weiteren sind an der Konsole das Bremsventil 10 und die Druckpunkteinrichtung 12 angeordnet, wobei die Druckpunkteinrichtung 12 identisch ist mit derjenigen, wie sie in Fig. 9 beschrieben ist.

Die Besonderheit dieses Ausführungsbeispiels liegt darin, daß ein Meßwertaufnehmer, im vorliegenden Fall ein Drehpotentiometer 44 im Bereich der Schwenkachse des Bremspedals 2 befestigt ist, so daß in Abhängigkeit vom Schwenkwinkel α des Bremspedals 2 ein Meßwertsignal abgegeben wird.

Die Widerstands-Kennlinie des Drehpotentionmeters kann, wie in Fig. 10c dargestellt, ansteigen (Widerstand proportional zum Schwenkwinkel α) oder abfallend (gestrichelt in Fig. 10c) gewählt werden.

Bei Betätigung des Bremspedals 2 erfolgt eine Widerstandsänderung am Drehpotentiometer 44, so daß ein entsprechendes Meßsignal an einen Verstärker 46 abgegeben wird, der ein Signal an ein elektromagnetisch verstellbares Druckreduzierventil 48 abgibt, wobei Verstärker 46 und Druckreduzierventil 48 das Inchventil 214 aus Fig. 2 bilden können, das wiederum einen Steuerdruck P an die Verstellpumpe oder ein anderes Element des Antriebssystems 50 abgibt, um den Inchvorgang einzuleiten. Das heißt, bei einer derartigen Inchbremseinrichtung erfolgt die Ansteuerung wahrend des Inchvorgangs allein über den Drehpotentiometer oder einen entsprechenden elektrischen Geber.

Während beim vorbeschriebenen Ausführungsbeispiel zwei Druckfedern 22 und 28 vorgesehen waren, wobei die Druckfeder 22 dem Inchbereich und die Druckfeder 28 dem Bremsvorgang der Antriebsachse zugeordnet sind, kann beim Ausführungsbeispiel gemäß Fig. 11 eine der Druckfedern - vorzugsweise die erste Druckfeder 22 - entfallen. Der dem Bremspedal entgegengebrachte Widerstand während des Inchvorgangs und die beiden Druckpunkte zu Beginn des Inchvorgangs und beim Übergang zum Bremsen der Achse werden - wie beim vorbeschriebenen Ausführungsbeispiel - durch die Druckpunkteinrichtung 12 erzeugt. Die sonstigen Bauelemente des Ausführungsbeispiels gemäß Fig. 11 entsprechen denjenigen des Ausführungsbeispiel gemäß Fig. 8, so daß auf weitere Erläuterungen verzichtet werden kann.

## Patentansprüche

1. Inchbremseinrichtung für ein Arbeitsgerät, insbesondere ein Nutzfahrzeug, mit einer Antriebseinrichtung (50, 102), einer Bremseinrichtung (110) und einer Betätigungseinrichtung (2), durch deren Verstellung sowohl die Bremseinrichtung (110) und die Antriebseinrichtung (50, 102) zur Erzeugung einer Bremswirkung derart ansteuerbar sind, daß in einem ersten Verstellbereich (I) die Bremswirkung im wesentlichen durch die Antriebseinrichtung (50, 102) erfolgt und in einem zweiten Verstellbereich (II) die Bremswirkung im wesentlichen durch die Bremseinrichtung (110) erfolgt,
dadurch gekennzeichnet, daß
- eine Druckpunkteinrichtung (12) vorgesehen ist, die mit der Betätigungseinrichtung (2, 24) in Wirkverbindung steht, mittels der im Übergangsbereich (III) zwischen dem ersten und zweiten Verstellbereich (I, II) ein Schwellenwiderstand (F₄ - F₃) aufbaubar ist, der über die Betätigungseinrichtung (2, 24) überwindbar ist, und die ein in einem Gehäuse (14, 30) aufgenommenes Federsystem hat, mit einer ersten vorgespannten Lastfeder (40), die mit einem ersten Ende an einem Anschlag (62) des Gehäuses (14, 30) abgestützt ist und mit einer zweiten Lastfeder (42), die parallel zur ersten Lastfeder (40) geschaltet ist, daß
- die beiden Lastfedern (40, 42) koaxial zueinander angeordnet sind, daß
- die erste Lastfeder (40) in einer Ruheposition auch mit ihrem zweiten Ende am Gehäuse (14, 30) abgestützt ist, und daß
- ein über die Betätigungseinrichtung (2) verstellbares Betätigungselement (24, 32) vorhanden ist, von dem in einem ersten Verstellbereich das eine Ende der zweiten Lastfeder (42) und in einem zweiten Verstellbereich das zweite Ende der ersten Lastfeder (40) im Sinne einer Erhöhung der Vorspannung der beiden Lastfedern (40, 42) mitnehmbar ist.

2. Inchbremseinrichtung nach Anspruch 1, dadurch gekennzeichnet, daß
das Gehäuse (30) der Druckpunkteinrichtung von einem an die Betätigungseinrichtung (2) in Anlage bringbaren als Mitnehmer dienenden Stellkolben (32) durchsetzt ist, der koaxial zu den Lastfedern (40, 42) angeordnet ist und an dem ein Federteller (38) längsverschiebbar geführt ist, der in Anlage bringbar ist mit dem Anschlag des Gehäuses (30), wobei
die erste Lastfeder (40) über den Federteller (38) in Anlage an den Anschlag bringbar ist und die zweite Lastfeder (42) an der von der ersten Lastfeder (40) abgewandten Seite des Federtellers (38) abgestützt ist, und wobei
die Federvorspannung und Federkonstanten der beiden Lastfedern derart abgestimmt sind, daß die Kraft zur Verformung der zweiten Lastfeder (42) im ersten Verstellbereich (I) geringer ist als diejenige Kraft, die zur Überwindung der Federvorspannung der ersten Lastfeder (40) aufgebracht werden muß.

3. Inchbremseinrichtung nach einem der vorhergehenden Ansprüche, dadurch gekennzeichnet, daß auch die zweite Lastfeder (42) in ihrer Ausgangslage mit Vorspannung in der Druckpunkteinrichtung aufgenommen ist.

4. Inchbremseinrichtung nach einem der vorhergehenden Ansprüche, dadurch gekennzeichnet, daß die Betätigungseinrichtung (2, 24) nach einem vorbestimmten Leerhub in Anlage an die Druckpunkteinrichtung bringbar ist.

5. Inchbremseinrichtung nach einem der vorhergehenden Ansprüche, gekennzeichnet durch eine Ansteuerung der Bremseinrichtung (110) derart, daß deren Bremswirkung erst nach einem vorgegebenen Zwischenhub (Δα, Δα') der Betätigungseinrichtung (2, 24) nach Mitnahme des zweiten Endes der ersten Lastfeder (40) erfolgt.

6. Inchbremseinrichtung nach einem der vorhergehenden Ansprüche, gekennzeichnet durch ein Bremsventil (10, 52, 70) mit einem Ventilschieber (16), der mit der Betätigungseinrichtung (2, 24) in Wirkverbindung steht und über das ein Steuerelement (214) der Antriebseinrichtung (102) mit einem Steuerdruck versorgbar ist.

7. Inchbremseinrichtung nach Anspruch 6, gekennzeichnet durch eine erste Druckfeder (22), die einerseits am Ventilschieber (16) und andererseits an der Betätigungseinrichtung (24) abgestützt ist.

8. Inchbremseinrichtung nach Anspruch 6 oder 7, gekennzeichnet durch eine zweite am Ventilschieber (16) abgestützte Druckfeder (28), die nach Durchfahren des ersten Verstellbereichs (I) in Anlage an die Betätigungseinrichtung (24) bringbar ist.

9. Inchbremseinrichtung nach einem der Ansprüche 6 bis 8, dadurch gekennzeichnet, daß die Betätigungseinrichtung (24) einen Betätigungskolben (24) hat, der koaxial zum Ventilschieber (16) in einem Ventilgehäuse (14) des Bremsventils (10) geführt ist.

10. Inchremseinrichtung nach Anspruch 9, dadurch gekennzeichnet, daß die Lastfedern (40, 42) koaxial zum Ventilschieber (16) am Ventilgehäuse (14) abgestützt sind, und der Betätigungskolben (24) im ersten Verstellbereich (I) in Anlage an die zweite Lastfeder (42) bringbar ist, und nach Durchfahren des ersten Verstellbereichs (I) mit einem Anlageabschnitt in Anlage an die vorgespannte erste Lastfeder (40) bringbar ist.

11. Inchbremseinrichtung nach den Ansprüchen 8 und 10, dadurch gekennzeichnet, daß die zweite Druckfeder (28) und die Lastfedern (40, 42) koaxial zueinander angeordnet sind und jeweils mit einem Endabschnitt in Anlage an den Betätigungskolben (24) bringbar sind.

12. Inchbremseinrichtung nach Anspruch 11, dadurch gekennzeichnet, daß in Verlängerung des Ventilschiebers (16) an seinem den Federn zugewandten Endabschnitt eine Gegenhalteplatte (56) eines Federtellers abgestützt ist, an der die beiden Druckfedern (22, 28) abgestützt sind und daß der Betätigungskolben (24) einen Anschlagring (72) hat, mit dem er nach einem vorbestimmten Hub in Anlage an die nicht vorgespannte zweite Lastfeder (42) bringbar ist.

13. Inchbremseinrichtung nach einem der vorhergehenden Ansprüche, gekennzeichnet durch einen Meßaufnehmer (44), der die Bewegung des Betätigungselements (2) erfaßt und der einer Steuereinheit (46) zugeordnet ist, über die die Antriebseinrichtung (50, 102) und/oder die Bremseinrichtung (110) in Abhängigkeit vom Meßsignal ansteuerbar ist.

14. Inchbremseinrichtung nach Anspruch 13, dadurch gekennzeichnet, daß die Steuereinheit (46) nur im ersten Verstellbereich (I) wirksam ist.

## Claims

1. Inching braking system for a work tool, in particular a utility vehicle, including drive means (50, 102), brake means (110) and actuating means (2) by adjustment of which both said brake means (110) and said drive means (50, 102) may be controlled to generate a braking effect, such that within a first adjustment range (I) the braking effect essentially takes place through the drive means (50, 102), and in a second adjustment range (II) the braking effect essentially takes place through the brake means (110),
characterised in that
- pressure point means (12) are provided which are in operative connection with said actuating means (2, 24), whereby in the transitional range (III) between said first and second adjustment ranges (I, II) a threshold resistance (F₄ - F₃) may be built up which may be overcome by means of said actuating means (2, 24), and which comprise a spring system received in a housing (14, 30), including a first biased load spring (40) having a first end supported against a stop (62) of said housing (14, 30) and a second load spring (42) connected in parallel with said first load spring (40), in that
- said two load springs (40, 42) are arranged coaxially with respect to each other, in that
- said first load spring (40) in a rest position is also supported by its second end against said housing (14, 30), and in that
- an actuating member (24, 32) is provided which may be adjusted through said actuating means (2) and whereby one end of said second load spring (42) may be drivingly engaged in a first adjustment range and the second end of said first load spring (40) may be drivingly engaged in a second adjustment range in the sense of an increase of the bias of the two load springs (40, 42).

2. Inching braking system according to claim 1, characterised in that
through said housing (30) of said pressure point means there extends an actuating piston (32) capable of being taken into contact with said actuating means (2) and serving as a driving member, which is arranged coaxially with respect to said load springs (40, 42) and on which a spring plate (38) capable of being taken into contact with the stop of said housing (30) is guided in longitudinal displacement, wherein
said first load spring (40) may be taken into contact with said stop by means of said spring plate (38), and said second load spring (42) is supported against the side of said spring plate (38) which faces away from said first load spring (40), and wherein
- spring bias and spring constants of said two load springs are set such that the force for deforming said second load spring (42) in said first adjustment range (I) is smaller than the force which must be applied for overcoming the spring bias of said first load spring (40).

3. Inching braking system according to any one of the preceding claims, characterised in that said second load spring (42) is also received with a bias in said pressure point means in its start position.

4. Inching braking system according to any one of the preceding claims, characterised in that said actuating means (2, 24) may be taken into contact with said pressure point means following a predetermined dead stroke.

5. Inching braking system according to any one of the preceding claims, characterised by control of said braking means (110) in such a way that the braking effect thereof will take place only following a predetermined intermediate stroke (Δα, Δα') of said actuating means (2, 24) following driving engagement of the second end of said first load spring (40).

6. Inching braking system according to any one of the preceding claims, characterised by a brake valve (10, 52, 70) including a valve spool (16) in operational connection with said actuating means (2, 24), whereby a control member (214) of said drive means (102) may be supplied with a control pressure.

7. Inching braking system according to claim 6, characterised by a first pressure spring (22) supported against said valve spool (16) on the one hand and against said actuating means (24) on the other hand.

8. Inching braking system according to claim 6 or 7, characterised by a second pressure spring (28) supported against said valve spool (16), which may be taken into contact with said actuating means (24) after passing through said first adjustment range (I).

9. Inching braking system according to any one of claims 6 to 8, characterised in that said actuating means (24) include an actuating piston (24) guided coaxially with respect to said valve spool (16) inside a valve housing (14) of said brake valve (10).

10. Inching braking system according to claim 9, characterised in that said load springs (40, 42) are supported against said valve housing (14) coaxially with respect to said valve spool (16), and said actuating piston (24) may be taken into contact with said second load spring (42) in said first adjustment range (I), and after passing through said first adjustment range (I), a contact portion thereof may be taken into contact with said biased first load spring (40).

11. Inching braking system according to claims 8 and 10, characterised in that said second pressure spring (28) and said load springs (40, 42) have a coaxial arrangement with respect to each other, and respective end portions thereof may be taken into contact with said actuating piston (24).

12. Inching braking system according to claim 11, characterised in that in prolongation of said valve slide (16) at the end portion thereof facing said springs, an abutment plate (56) of a spring plate is supported on which said two pressure springs (22, 28) are supported, and in that said actuating piston (24) includes a stop ring (72) through the intermediary of which it may be taken into contact with the non-biased second load spring (42) following a predetermined stroke.

13. Inching braking system according to any one of the preceding claims, characterised by a measurement sensor (44) for detecting the displacement of said actuating member (2) and associated with a control unit (46) through which said drive means (50, 102) and/or said brake means (110) may be controlled depending on the measurement signal.

14. An inching braking device according to claim 13, characterised in that said control unit (46) is effective in said first adjustment range (I) only.

## Revendications

1. Système de freinage d'approche lente pour un outil, notamment un véhicule utilitaire, comportant un moyen d'entraînement (50, 102), un moyen de freinage (110) et un moyen de commande (2), par le réglage duquel et ledit moyen de freinage (110) et ledit moyen d'entraînement (50, 102) peuvent être sélectionnés pour la génération d'une action de freinage d'une manière que dans une première zone de réglage (I), l'action de freinage se produit essentiellement par le moyen d'entraînement (50, 102) et dans une seconde zone de réglage (II), l'action de freinage se produit essentiellement par le moyen de freinage (110),
caractérisé en ce que
- un moyen de point de poussée (12) est prévu, étant en relation active avec le moyen de commande (2, 24), à l'aide duquel dans la zone de transition (III) entre la première et la seconde zone de réglage (I, II) une résistance seuil (F₄ - F₃) peut être constituée, pouvant être surmontée par le moyen de commande (2, 24), et qui comprend, reçu dans un boîtier (14, 30), un système à ressorts comportant un premier ressort de charge précontraint (40) s'appuyant avec une première extrémité sur une butée (62) du boîtier (14, 30) et un second ressort de charge (42) monté en parallèle par rapport au premier ressort de charge (40), que
- les deux ressorts de charge (40, 42) sont disposés coaxialement l'un par rapport à l'autre, que
- dans une position de repos, le premier ressort de charge (40) s'appuie aussi avec sa seconde extrémité sur le boîtier (14, 30), et que
- un élément de commande (24, 32) réglable par le moyen de commande (2) est prévu par lequel, dans une première zone de réglage, une extrémité du second ressort de charge (42) et dans une seconde zone de réglage, la seconde extrémité du premier ressort de charge (40) peuvent être entraînées dans le sens d'une augmentation de la précontrainte des deux ressorts de charge (40, 42).

2. Système de freinage d'approche lente selon la revendication 1, caractérisé en ce que
le boîtier (30) du moyen de point de poussée est entrecoupé par un piston de réglage (32) servant d'entraîneur et pouvant prendre appui sur le moyen de commande (2), disposé coaxialement par rapport aux ressorts de charge (40, 42) et auquel est disposée une cuvette de ressort (38) pouvant être déplacée longitudinalement et pouvant prendre appui sur la butée du boîtier (30),
le premier ressort de charge (40) pouvant être amené à prendre appui sur la butée par la cuvette de ressort (38) et le second ressort de charge (42) étant soutenu sur le côté opposé au premier ressort (40) de la cuvette de ressort (38), et
la précontrainte de ressort et la flexibilité de ressort des deux ressorts de charge étant déterminées de manière que la force de déformation du deuxième ressort de charge (42) dans la première zone de réglage est plus faible que la force devant être appliquée pour surmonter la précontrainte de ressort du premier ressort de charge (40).

3. Système de freinage d'approche lente selon l'une quelconque des revendications précédentes, caractérisé en ce que le second ressort de charge (42), lui aussi, est reçu dans sa position de repos avec précontrainte dans le moyen de point de poussée.

4. Système de freinage d'approche lente selon l'une quelconque des revendications précédentes, caractérisé en ce que le moyen de commande (2, 24) peut être amené à prendre appui sur le moyen de point de poussée après une course à vide prédéterminée.

5. Système de freinage d'approche lente selon l'une quelconque des revendications précédentes, caractérisé par une sélection du moyen de freinage (110) de manière que son action de freinage n'agit qu'après une course intermédiaire (Δα, Δα') prédéterminée du moyen de commande (2, 24) après entraînement de la seconde extrémité du premier ressort de charge (40).

6. Système de freinage d'approche lente selon l'une quelconque des revendications précédentes, caractérisé par un robinet de freinage (10, 52, 70) comprenant un robinet-vanne (16) étant en relation active avec le moyen de commande (2, 24), et par lequel un élément d'actionnement (214) du moyen d'entraînement (102) peut être approvisionné en pression motrice.

7. Système de freinage d'approche lente selon la revendication 6, caractérisé par un premier ressort de pression (22) qui s'appuie d'une part sur le robinet-vanne (16) et d'autre part sur le moyen de comande (24).

8. Système de freinage d'approche lente selon la revendication 6 ou 7, caractérisé par un second ressort de pression (28) appuyé sur le robinet-vanne (16), pouvant être amené à prendre appui sur le moyen de commande (24) après passage de la première zone de réglage (I).

9. Système de freinage d'approche lente selon l'une quelconque des revendications 6 à 8, caractérisé en ce que le moyen de commande (24) comporte un piston de commande (24) disposé coaxialement par rapport au robinet-vanne (16) dans une cage de soupape (14) du robinet de freinage (10).

10. Système de freinage d'approche lente selon la revendication 9, caractérisé en ce que les ressorts de charge (40, 42) s'appuient coaxialement par rapport au robinet-vanne (16) sur la cage de soupape (14) et dans la première zone de réglage (I), le piston de commande (24) peut prendre appui sur le deuxième ressort de charge (42) et peut, après passage de la première zone de réglage (I), prendre appui sur le premier ressort de charge précontraint (40) avec une section d'appui.

11. Système de freinage d'approche lente selon les revendications 8 et 10, caractérisé en ce que le second ressort de pression (28) et les ressorts de charge (40, 42) sont disposés coaxialement l'un par rapport aux autres et peuvent prendre appui respectivement avec une section d'extrémité sur le piston de commande (24).

12. Système de freinage d'approche lente selon la revendication 11, caractérisé en ce qu'en prolongement du robinet-vanne (16) à sa section d'extrémité orientée vers les ressorts, une plaque d'arrêt (56) d'une cuvette de ressort est appuyée, sur laquelle les deux ressorts de pression (22, 23) s'appuient et que le piston de commande (24) comporte une bague de butée (72) avec laquelle il peut prendre appui sur le second ressort de charge (42) non-précontraint après une course prédéterminée.

13. Système de freinage d'approche lente selon l'une quelconque des revendications précédentes, caractérisé par un enregistreur-mesureur (44) qui enregistre le mouvement de l'élément de commmande (2) et qui est affecté à un ensemble d'actionnement (46) par lequel le moyen d'entraînement (50, 102) et/ou le moyen de freinage (110) peuvent être réglés en fonction du signal de mesure.

14. Système de freinage d'approche lente selon la revendication 13, caractérisé en ce que l'ensemble d'actionnement (46) n'agit que dans la première zone de réglage (I).
